# EUROPEAN PATENT APPLICATION

(11) **EP 2 854 093 A1**
(43) Date of publication of application: **01.04.2015**
(21) Application number: 13794134.0
(22) Date of filing: 28.01.2013
(51) Int. Cl.: G06Q 30/06, G06Q 50/10

(54) **PROFIT SHARING METHOD OF CONTENT-COOPERATIVE WORK**

(30) Priority: 23.05.2012 KR 20120054762
(71) Applicant: Lee, Chung Jong, Seoul 152-729 (KR)
(72) Inventor: Lee, Chung Jong, Seoul 152-729 (KR)
(74) Representative: reuteler & cie SA
(86) International application number: PCT/KR2013/000651
(87) International publication number: WO 2013/176374

(57) **Abstract**

A profit sharing method of content-cooperative work according to the present invention comprises the steps of: registering cooperative workers for content; setting a weight per part of the content; writing out, by the cooperative workers, a draft of the content and registering the draft of the content to a server; writing out revised drafts of the registered draft and registering the revised drafts as different versions; if one of the registered versions of the content is selected, analyzing a contribution of each cooperative worker by applying the weights to the content of the selected version; deciding on a shared profit to be provided to each cooperative worker according to the analyzed contribution and signing a contract with a record label. The present invention relates to a profit sharing method of content-cooperative work for producing content by two or more authors together and sharing profits with the authors (for example, a songwriter, a composer, a novelist, a poet, a playwright, and the like) who have participated in the production of the content when the produced content is ultimately selected. In addition, the present invention provides an accurate definition and sharing of profits in a situation in which cooperative work for the production of content becomes gradually more important, thereby producing better quality content in a cooperative environment.

## Description

### TECHNICAL FIELD

The present disclosure relates to content-cooperative work, and more particularly, to a profit sharing method and system for content-cooperative work written by cooperative work from many workers.

### BACKGROUND ART

In recent, the market size and power of entertainment industry are increasing like the high-tech industry, such as bio, semiconductor or IT industry, or financial industry and young people who are interested in songs and dance considered as cultural content representative of Hallyu and want to develop and follow musical talent through songwriting or composition for utility music are significantly increasing.

In addition, since a special school or private educational institute provides formal education or special learning processes for such songwriting or composition (arrangement), it is possible to learn systematic theory and practical techniques, and due to the development of computer software and the generalization of internet, a service system that enables lyrics or music content to be made online is being developed.

Korean Patent Publication No. 10-2001-0111126 (hereinafter, referred to as a `related literature') discloses some content related to a songwriting (or composing) method and system over the internet.

The method according to the related literature relates to a cooperative composing method and system using the internet and a business method using the same as described in the publication, and more particularly, to a business method that includes pre-producing typical song components such as lyrics, melody, and accompaniment parts, providing them through a server, receiving only other music components, and evaluating it in public to co-produce songs and sell completed songs to an agency through auction.

A composition method according to the related literature includes a first step in which an access request is received from a client PC, and when specific music components (essential data such as lyrics, melody or accompaniment) pre-produced and stored in a server are selected, the server outputs data on the music components requested to the client PC, a second step in which a screen is displayed so that other parts for the music component selected are input by using the data transmitted from the client PC, a third step in which music data on the music component selected from the client PC is input, and a fourth step in which the music data input in the third step is synthesized with the music component selected by a user.

However, although the related literature Korean Patent Publication No. 10-2001-0111126 has advantages in that it is possible to discover and raise a competent, new composer and it is possible to collect better music content from many composers (songwriters) and produce the music content in a cooperative environment, there are limitations in that when many songwriters (or composers) participate in producing a song, it is difficult to measure the level of contribution of each participant (songwriter or composer), and since there is no criterion to analyze the level of contribution, it is difficult to fairly share profits.

### DISCLOSURE OF THE INVENTION

### TECHNICAL PROBLEM

In general, there is solo or two cooperative songwriters (or composers), and when there are two cooperative persons, profit sharing is determined according to the contract between two persons and there is a limitation in sharing profits according to the level of contribution accurately calculated.

Moreover, when two or more cooperative songwriters (composers or content authors) participate in producing a record or writing, it is difficult to measure the level of contribution of each participant (such as a songwriter, composer or content writer), and since there is no criterion to analyze the level of contribution, there is a limitation in that it is difficult to fairly share profits..

### TECHNICAL SOLUTION

Embodiments provide a profit sharing method of content-cooperative work that quantifies the level of contribution of each participant (such as a songwriter or composer) and shares profits according to the level of contribution, when two or more participants participate in producing content.

Additional characteristics and advantages of the embodiments will be represented in the following description and some of them will be clarified by the following description or known well through the practice of the embodiments. The goal and other advantages of the embodiments will be implemented by a structure indicated in the following claims as well as the following description and the accompanying drawings.

### ADVANTAGEOUS EFFECTS

Embodiments implement a profit sharing method of content-cooperative work that provides a profit sharing method for a writer (such as a songwriter, composer or novelist) participated in producing content when two or more content writers produce content and the content produced by them is finally selected.

In addition, the embodiments may produce better content in a cooperative environment by realizing the accurate definition and sharing of profits in a situation in which cooperative work of content production becomes gradually important.

### BRIEF DESCRIPTION OF THE DRAWINGS

Fig. 1 is a block diagram of a content profit sharing system according to an embodiment.
Fig. 2 is a flowchart of a profit sharing method of content-cooperative work according to an embodiment.
Fig. 3 is a table representing sentence components of lyrics written by cooperative work.
Fig. 4 is a table analyzing the level of contribution of cooperative workers by applying a weight to lyrics.
Fig. 5 is a table representing the music organization of music made by cooperative work according to an embodiment.
Fig. 6 is a table analyzing the level of contribution of each co-worker by applying a weight to music.

### DESCRIPTION OF THE SYMBOLS IN MAIN PORTIONS OF THE DRAWINGS

100: Many co-workers 200: Record production server or publication server
300: Agency or publisher.

### MODE FOR CARRYING OUT THE INVENTION

In order to achieve objects above, a profit sharing method of content-cooperative work according to an embodiment includes:

registering cooperative workers for content; setting a weight of each part of the content; writing, by the cooperative workers, a draft of the content and registering the draft of the content with a server 200; making a revision of a registered draft and registering the revision with the server 200 as different versions; analyzing a level of contribution of each cooperative worker by applying the weight to a selected version of the content when one of registered versions of the content is selected; and determining a shared profit to be provided to each cooperative worker according to the level of contribution analyzed and making a contract with a record producer.

The content may be one of creative work including lyrics, a poem, a novel, an essay, and a play.

The analyzing of the level of contribution may include dividing sentence components of the selected version of content based on word classes and counting a number of each word class.

The analyzing of the level of contribution may include ultimately summing a number of selected words of a corresponding cooperative worker from a version R0 to a version Rx when the version Rx of content is selected; applying a weight to a sum to find an ultimate point P; calculating a percentage of the ultimate point P to the sum AP of the ultimate points of all cooperative workers to find the level of contribution of a corresponding cooperative worker.

The analyzing of the level of contribution may include dividing music organization of music into prelude, main, first chorus, bridge and second chorus parts and detecting a revised amount of each part.

The analyzing of the level of contribution may include ultimately summing a number of selected words of a corresponding cooperative worker from a version R0 to a version Rx when the version Rx of content is selected; applying a weight to a sum to find an ultimate point P; calculating a percentage of the ultimate point P to the sum AP of the ultimate points of all cooperative workers to find the level of contribution of a corresponding cooperative worker.

The point of an embodiment is to implement a profit sharing method of content-cooperative work that provides a profit sharing method for a musician (such as a songwriter or composer) or an author participating in producing a record when two or more content musicians (writers) produce content (such as lyrics, music, a poet, a novel, an essay or a play) and the content produced by them is finally selected.

Typically, there is solo or two cooperative songwriters (composers or writers) and when there are two cooperative persons, profit sharing is determined by the contract between the two persons. However, when many songwriters (composers or writers) participate in producing a record (publishing a book), profit sharing is not clear and thus songwriting (composition or writing) is performed by one person in many cases.

Exemplary embodiments are described below with reference to the drawings.

A profit sharing method of content-cooperative work according to the present invention may be applied to music production (such as songwriting or composition) and literary work (such as a poet, novel, essay or play).

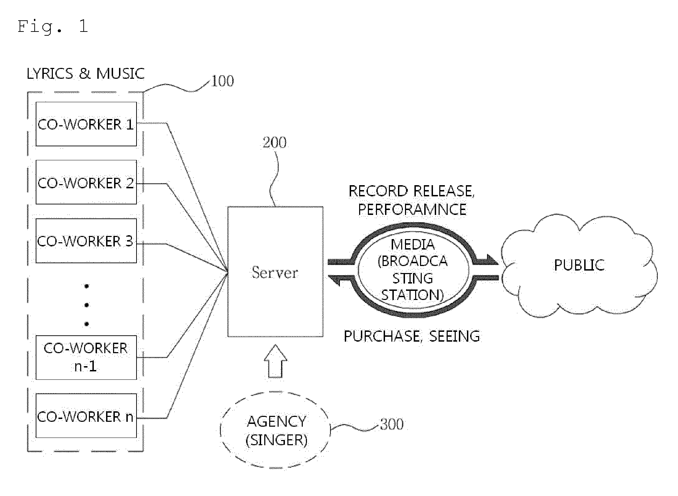

Fig. 1 is a block diagram of a content profit sharing system according to an embodiment.

As shown in Fig. 1, the content profit sharing system according to the embodiment includes many cooperative workers 100 (hereinafter, referred to as a 'co-workers'), a record production server or publication server 200, and agency 300 (a singer or publisher).

Each of the many co-workers 100 writes a draft of lyrics or music by using his or her musical emotion and personality or revises the draft written to participate in producing a song.

The record producer server 200 registers the draft or the revision written by the many co-workers 100 as different versions and when one of versions of lyrics or music registered is ultimately selected, a preset weight is applied to the selected version of lyrics or music is applied to analyze the level of contribution of each co-worker. In addition, shared profit to be provided to each co-worker is determined according to the level of contribution analyzed.

The agency 300 ultimately selects one of the versions of lyrics or music registered with the record producer server 200 and makes a contract for record sales and performance profits.

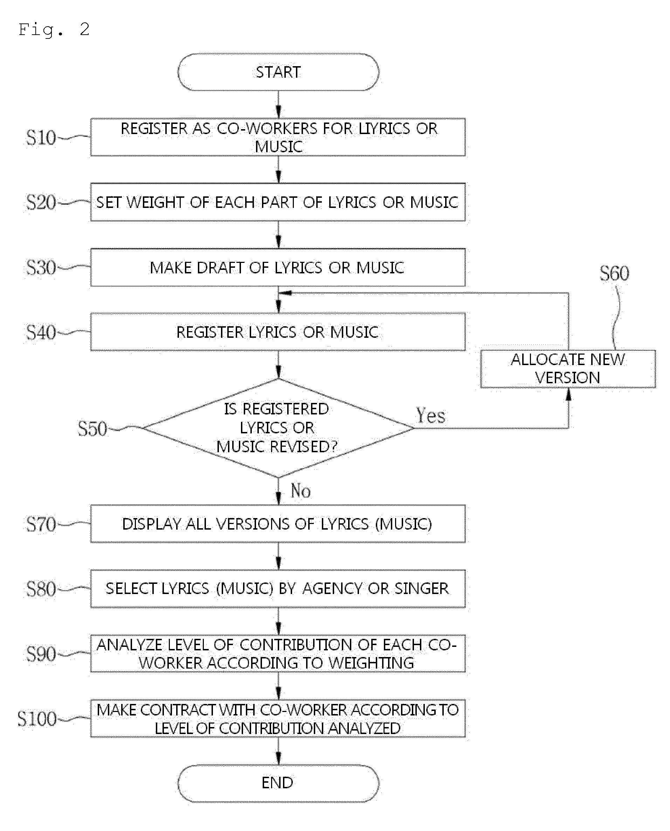

Fig. 2 is a flowchart of a profit sharing method of content-cooperative work according to an embodiment.

As shown in Fig. 2, according to the content profit sharing system of the present invention, songwriters (writers) or composers 100 who want to participate in record work access the server 200 and register as co-workers for record (publication) production in step S10.

In addition, in step S10 of registering with the server 200 as a co-worker, a procedure leading to web copyright agreement is performed so that there is no chance to cause a copyright dispute.

The co-worker registration step S10 includes setting a co-worker environment and designing co-worker security.

When the registration of the co-workers 100 is completed, a weight of a word configuring each sentence of lyrics (writing) is set in step S20.

In this case, the word configuring each sentence of lyrics (writing) is divided into word classes such as noun, adjective, adverb, prefix and postfix for convenience in order to set the weight. The server 200 sets different weights for each word class. For example, the weight of the noun may be set to seven points, the weight of the adjective may be set to five points, the weight of the adverb may be set to four points, and each weight of the prefix and postfix may be set to three points, and they are organized according to the length of syllable of each word class.

The weight setting step S20 may include discussing weights of co-workers 100, temporarily determining the weights of the co-workers 100, discussing a revision width for the temporary determination of the weights of the co-workers 100, and determining the revision width for the temporary determination of the weights of the co-workers 100.

The co-worker 100 and the producer side 200 make a contract for delegating the revision width for the temporary determination of the weight to the producer side 200. When actual lyrics (writing) or music is determined after the producer side 200 discusses with actual agency (or singers), a contract that the revision width for the temporary determination of the weight is entirely delegated to the producer side 200 is needed.

Then, when the weight of each word is set and plans for the subject and genre of content to be produced are completed, the co-worker 100 who has completed a draft of lyrics (writing) registers a completed draft with the producer server 200. In steps S30 to S40, the step S40 of registering the draft of lyrics (writing) may include accessing the producer server 200, checking the user authentication of the co-worker 100, passing the user authentication, and registering the draft of lyrics (writing).

Once the draft of lyrics (writing) is registered, each co-worker 100 accesses the server 200, revises and supplements registered lyrics (writing) to write various versions R0 to R6 of lyrics (writing) and registers the various versions of lyrics (writing) with the server 200 in steps S50 to S60.

That is, after co-worker 1 first registers the draft R0 of lyrics (writing) with the server 200, co-worker 2 accesses the server 200, revises a registered draft and registers revised lyrics (writing) with the server 200 as a new version R1. In addition, co-worker 3 accesses the server 200, revises a registered version R1 of lyrics (writing) and registers revised lyrics (writing) with the server 200 as a new version R2. By the repetition of such processes, various versions R0 to R6 of lyrics (writing) are registered with the server 200.

A co-worker may revise/supplement various versions of lyrics (writing) registered by others and also revise/supplement a version of lyrics (writing) registered by others.

When lyrics (writing) is completed through such processes S30 to S60, the producer server 200 provides the agency 300 (a singer or publisher) with a notice that lyrics (writing) has been completed, and waits for the agency 300 to access.

In order to make a contract for a literary work (such as lyrics, music or writing) with the producer side 200, the agency 300 accesses the producer server 200 sets an agency 300 environment, designs agency 300 security, and registers as a user.

When the agency 300 accesses the producer server 200, all versions of lyrics (writing) are first displayed so that it is possible to read lyrics (writing) registered with the server 200. The agency 300 reviews each version of lyrics (writing) displayed, in step S70 and ultimately selects one lyrics (writing) in step S80.

Once one literary work (such as a version R6) is ultimately selected, the producer server 200 applies a weight to a selected version of a literary work and analyzes the level of contribution of each co-worker in steps S80 to S90.

In order to analyze the level of contribution of each co-worker, the server 200 first analyzes the sentence (word) component of the selected literary work (such as a version R5). In an embodiment, the component of the selected literary work (such as a version R6) is divided into word classes (such as noun, adjective, adverb, prefix and postfix) and the number of words corresponding to each word class is counted.

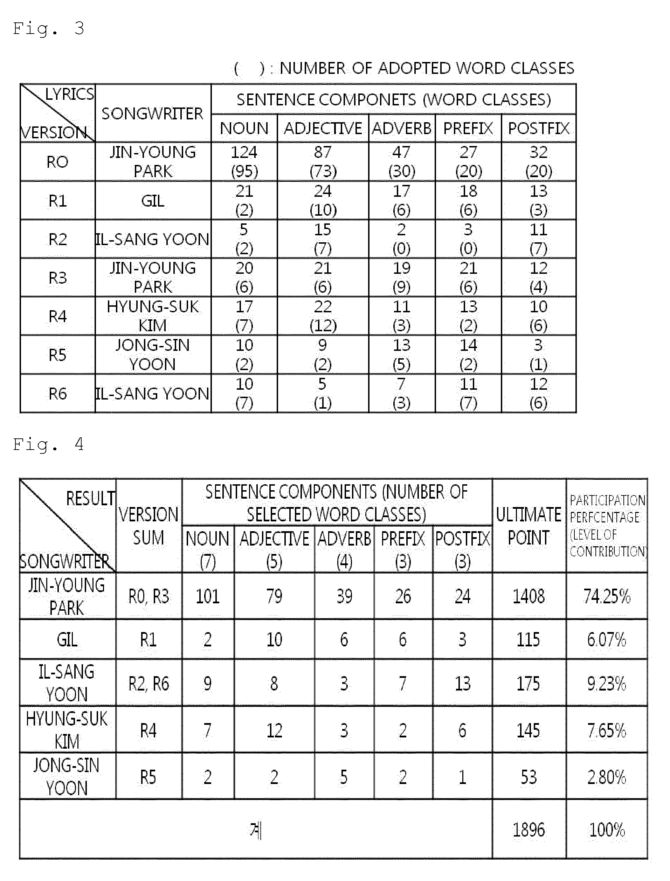

Fig. 3 is a table representing the sentence component of lyrics written by cooperative work and shows the name of a co-worker who has completed each version of lyrics through revision, the component of sentence (word classes), and the number of words corresponding to each word class.

As shown in Fig. 3, a co-worker who has written a first version R0 of lyrics, i.e., a draft of lyrics is Jin-Young Park, and the sentences of lyrics include 124 nouns, 87 adjectives, 47 adverbs, 27 prefixes and 32 postfixes.

In addition, a second version R1 of lyrics obtained through revision of the first version R0 has been written by a songwriter, Gil, and some words (for example, 21 nouns, 24 adjectives, 17 adverbs, 18 prefixes and 13 postfixes) have been revised.

Then, a songwriter, Il-Sang Yoon has revised some words (for example, 5 nouns, 15 adjectives, 2 adverbs, 3 prefixes and 11 postfixes) of the version R1 to create a version R2, and a songwriter, Jin-Young Park has further revised some words (for example, 20 nouns, 21 adjectives, 19 adverbs, 21 prefixes and 12 postfixes) of the version R2 to create a version R3.

Then, a songwriter, Hyung-Suk Kim has revised some words (for example, 17 nouns, 22 adjectives, 11 adverbs, 13 prefixes and 10 postfixes) of the version R3 to create a version R4; a songwriter, Jong-Sin Yoon has revised some words (for example, 10 nouns, 9 adjectives, 13 adverbs, 14 prefixes and 3 postfixes) of the version R4 to create a version R5; and the songwriter, Il-sang Yoon has further revised some words (for example, 10 nouns, 5 adjectives, 7 adverbs, 11 prefixes and 12 postfixes) of the version R5 to create a version R6.

The number in a parenthesis '()' in the table in Fig. 3 represents the number of words (word classes) adopted in each version when a literary work (such as a version R6) is ultimately selected.

In addition, when counting the number of words (word classes) adopted in each version, a priority principle is applied. Even if a first half of R4 and a last half of R7 are determined and there is a reversal in R4 or R7, a final reversal is not determined and when there is the same word as the final reversal, the priority of the word belongs to a person who has first used the word.

Fig. 4 is a table analyzing the level of contribution of each co-worker by applying a weight to lyrics.

Ultimately, when a version R6 of lyrics is selected, the number of words selected from each co-worker 100 from the version R0 to the version R6 (R0→R1→R2→R3→R4→R5→R6) is summed and a weight is applied to find an ultimate point. In addition, a percentage is calculated from the sum (for example, 1896) of the ultimate points of all co-workers (for example, Jin-Young Park, Il-Sang Yoon, Hyung-Suk Kim, and Jong-Sin Yoon) to find the level of contribution of a corresponding co-worker.

For example, since the co-worker, Jin-Young Park has written versions R0 and R3 of lyrics, the words (95 nouns, 73 adjectives, 30 adverbs, 20 prefixes, and 20 postfixes) selected in R0 and the words (6 nouns, 6 adjectives, 9 adverbs, 6 prefixes, and 4 postfixes) selected in R3 are summed, and weights (7 points for the noun, 5 points for the adjective, 4 points for the adverb, 3 points for the prefix, and 3 points for the postfix) are applied to find ultimate points P (for example, 1408). In addition, a percentage of the 1408 points to the sum (for example, 1896) of the ultimate points AP of all co-workers is calculated to fine the level of contribution (74.28%) of a corresponding co-worker.

In addition, the levels of contribution of co-workers, Gil, Il-Sang Yoon, Hyung-Suk Kim and Jong-Sin Yoon are respectively found as 6.07%, 9.23%, 7.65%, and 2.80% by using such a manner.

Then, a shared profit to be provided to each co-worker 100 is determined according to the level of contribution found in step S100.

The process S100 of making the contract with each co-worker 100 may include transmitting a sharing-profit result value determined according to the level of contribution to each participant (co-worker 100), reviewing and approving the sharing-profit result value by each participant (co-worker 100), reviewing a contract between the record producer side 200 and each participant (co-worker 100), approving the contract between the record producer side 200 and each participant (co-worker 100), reviewing a contract between the record producer side 200 and the agency 300 (or a singer), and approving the contract between the record producer side 200 and the agency 300 (or a singer).

After the contract between the record producer side 200 and the agency 300 (or a singer) is approved, royalties excluding a system usage fee are accurately shared according to the level of contribution of each co-worker. The record producer server 200 may build a sharing system for this to be automatically deposited into a bank account.

A profit sharing method of cooperative work related to lyrics may be equally applied to a literary work (such as a poem, a novel, an essay or a play).

In the following, how to analyze the level of contribution when music is completed by cooperative work is described.

The organization of music is divided into front, main, first chorus, bridge, and second chorus parts and weights are respectively set to parts (prelude, main, first chorus, bridge, and second chorus parts). The server 200 sets different weights for each organized part of music. For example, the weight of the prelude part may be set to three points, the weight of the main part may be set to six points, the weight of the first chorus part may be set to two points, the weight of the bridge may be set to three points and the weight of the second chorus part may be set to two points.

Also, the prelude or bridge part may have a small weight and the main and chorus parts may have a high weight. Even if the prelude and the bridge have long content, they may not exceed 20% of music, the main and chorus parts (first and second chorus parts) may also have the same weight, the weight of the main part may also be six points, the weight of the chorus parts may also be four points, the weight of the main part may be four points, and the weight of the chorus parts may also be six points.

The weight applied to each part may be previously adjusted and in some cases, the agency 300 (or a singer) may request a certain adjustment before making music. A copyright holder for music may be secret.

A weight applied to the organized part of music is determined by mutual discussion between co-workers and the server 200 reflects it and automatically draws a result value (a shared profit result value determined according to the level of contribution).

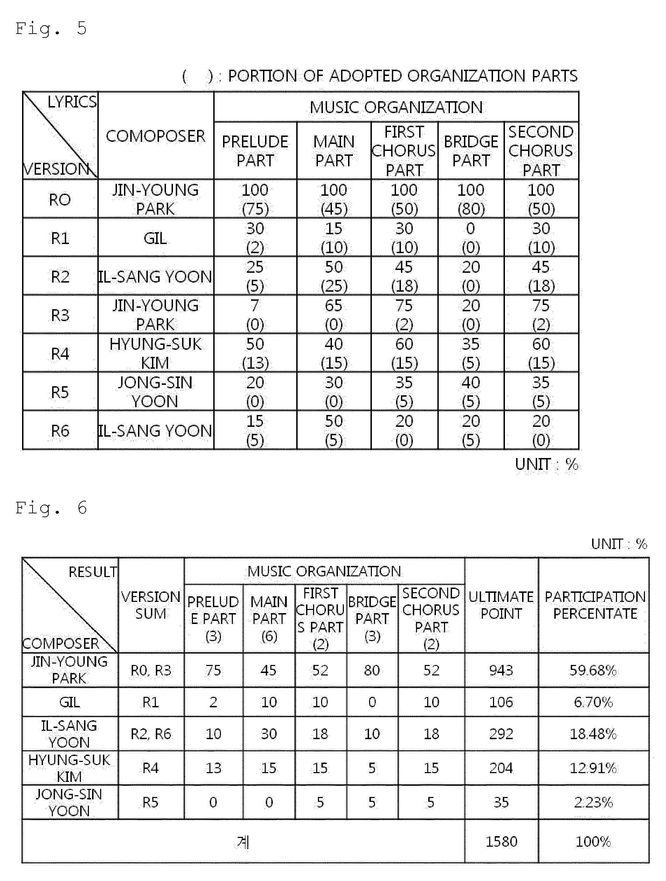

Fig. 5 is a table representing the organization of music made by cooperative work according to an embodiment and represents the name of a co-worker who has revised each version of music, the organization of music and the percentage of each organized part.

As shown in Fig. 5, when it is assumed that a co-worker who has made a first version R0 of music, i.e., a draft of music is a composer, Jin-Young Park, and Jin-Young Park has registered the draft of music completed with the server 200 as the first version R0, the organization of music is represented as corresponding to 100% of the prelude part, 100% of the main part, 100% of the first chorus part, 100% of the bridge part, and 100% of the second chorus part.

A second version R1 of music obtained by revising the first version R0 has been made by a composer, Gil and in the organization of music, 30% of the prelude part, 15% of the main part, 30% of the first chorus part, 0% of the bridge part, and 30% of the second chorus part have been revised.

Then, a composer Il-Sang Yoon has revised 25% of the prelude part, 50% of the main part, 1% of the first chorus part, 20% of the bridge part, and 45% of the second chorus part of the version R1 to create a version R2, and a composer Jin-Young Park has further revised (for example, 7% of the prelude part, 65% of the main part, 75% of the first chorus part, 20% of the bridge part, and 75% of the second chorus part of) the version R2 to create a version R3.

Then, a composer Hyung-Suk Kim has revised (for example, 50% of the prelude part, 40% of the main part, 60% of the first chorus part, 35% of the bridge part, and 60% of the second chorus part of) the version R3 to create a version R4, a composer Jong-Sin Yoon has revised (for example, 20% of the prelude part, 30% of the main part, 35% of the first chorus part, 40% of the bridge part, and 35% of the second chorus part of) the version R2 to create a version R5, and the composer Il-Sang Yoon has further revised (for example, 15% of the prelude part, 50% of the main part, 20% of the first chorus part, 20% of the bridge part, and 20% of the second chorus part of) the version R2 to create a version R6.

The number in a parenthesis '()' in the table in Fig. 5 represents the portion of the organized part of music adopted in each version when music (such as a version R6) is ultimately selected.

Fig. 6 is a table analyzing the level of contribution of each co-worker by applying a weight to music.

Ultimately, when the version R6 of music is selected, the portion (the number in the parenthesis ` ()' ) of the organized part of music selected from each co-worker 100 from the version R0 to the version R6 (R0→R1→R2→R3→R4→R5→R6) is summed and a weight is applied to find ultimate points. In addition, a percentage is calculated from the sum (for example, 1580) of the ultimate points of all co-workers (for example, Jin-Young Park, Gil, Il-Sang Yoon, Hyung-Suk Kim, and Jong-Sin Yoon) to find the level of contribution of a corresponding co-worker.

For example, since a co-worker Jin-Young Park has made versions R0 and R3 of music, the portion (75% of the prelude part, 45% of the main part, 50% of the first chorus part, 80% of the bridge part, and 50% of the second chorus part) of the selected music organization part of R0 and the portion (7% of the prelude part, 65% of the main part, 75% of the first chorus part, 20% of the bridge part, and 75% of the second chorus part) of the selected music organization part of R3 are summed and weights (three points for a noun, six points for an adjective, two points for an adverb, three points for a prefix and two points for a postfix) are applied to find the ultimate points A (for example, 943). In addition, a percentage of the 943 points to the sum AP (for example, 1580) of the ultimate points of all co-workers is calculated to find the level of contribution (59.68%) of a corresponding co-worker.

In addition, the levels of contribution of co-workers, Gil, Il-Sang Yoon, Hyung-Suk Kim and Jong-Sin Yoon are respectively found as 6.70%, 18.48%, 12.91%, 2.23% by using such a manner.

Embodiments as described above implement a profit sharing method of content-cooperative work that provides a profit sharing method for a writer (such as a songwriter, composer or novelist) participated in producing content when two or more writers produce content and the content produced by them is finally selected.

The embodiments may produce better content in a cooperative environment by realizing the accurate definition and sharing of profits in a situation in which cooperative work of content production becomes gradually important.

Although the present invention is described with reference to an embodiment(s) illustrated in the drawings, the embodiments are only exemplary and a person skilled in the art will understand that various variations may be implemented and all or some of the above-described embodiment(s) may be selectively combined.

Thus, the true protective scope of the present invention will be defined by the technical spirit of the following claims. Embodiments as described above implement a profit sharing method of content-cooperative work that provides a profit sharing method for a content writer (such as a songwriter, composer or novelist) participated in producing content when two or more writers produce content and the content produced by them is finally selected.

In addition, the embodiments may produce better content in a cooperative environment by realizing the accurate definition and sharing of profits in a situation in which cooperative work of content production becomes gradually important.

## Claims

1. A profit sharing method of content-cooperative work, the profit sharing method comprising:
registering cooperative workers for content, one of lyrics, a poem, a novel, an essay, and a play;
setting a weight of each part of the content;
writing, by the cooperative workers, a draft of the content and registering the draft of the content with a server 200;
making a revision of a registered draft and registering the revision with the server 200 as different versions;
analyzing a level of contribution of each cooperative worker by applying the weight to a selected version of the content when one of registered versions of the content is selected; and
determining a shared profit to be provided to each cooperative worker according to the level of contribution analyzed and making a contract with a record producer.

2. The method of claim 1, The content may be one of creative work including lyrics, a poem, a novel, an essay, and a play.

3. The method of claim 2, wherein the analyzing of the level of contribution comprises dividing sentence components of the selected version of content based on word classes and counting a number of each word class.

4. The method of claim 3, wherein the word classes comprise a noun, an adjective, an adverb, a prefix, and a postfix.

5. The method of claim 2, wherein the analyzing of the level of contribution comprises:
ultimately summing a number of selected words of a corresponding cooperative worker from a version R0 to a version Rx when the version Rx of content is selected;
applying a weight to a sum to find an ultimate point P; and
calculating a percentage of the ultimate point P to the sum AP of the ultimate points of all cooperative workers to find the level of contribution of a corresponding cooperative worker.

6. The method of claim 1, wherein the content is a composition of music.

7. The method of claim 6, wherein the analyzing of the level of contribution comprises dividing music organization of music content into prelude, main, first chorus, bridge and second chorus parts and detecting a revised amount of each part.

8. The method of claim 6, wherein the analyzing of the level of contribution comprises:
ultimately summing a portion of a selected music organization part of a corresponding cooperative worker from a version R0 to a version Rx when the version Rx of music content is selected.
applying a weight to a sum to find an ultimate point P;
calculating a percentage of the ultimate point P to the sum AP of the ultimate points of all cooperative workers to find the level of contribution of a corresponding cooperative worker.

## Amended claims

### Amended claims under Art. 19.1 PCT

1. (Amended) A profit sharing method of content-cooperative work, the profit sharing method comprising:
registering cooperative workers for content, one of lyrics, a poem, a novel, an essay, and a play;
setting a weight of each part of the content;
writing, by the cooperative workers, a draft of the content and registering the draft of the content with a server 200;
making a revision of a registered draft and registering the revision with the server 200 as different versions;
analyzing a level of contribution of each cooperative worker by applying the weight to a selected version of the content when one of registered versions of the content is selected; and
determining a shared profit to be provided to each cooperative worker according to the level of contribution analyzed and making a contract with a record producer,
wherein the analyzing of the level of contribution comprises:
ultimately summing a number of selected words of a corresponding cooperative worker from a version R0 to a version Rx when the version Rx of content is selected;
applying a weight to a sum to find an ultimate point P;
calculating a percentage of the ultimate point P to the sum AP of the ultimate points of all cooperative workers to find the level of contribution of a corresponding cooperative worker.

2. (Cancelled)

3. (Amended) The profit sharing method of claim 1, wherein the analyzing of the level of contribution comprises dividing sentence components of the selected version of content based on word classes and counting a number of each word class.

4. The method of claim 3, wherein the word classes comprise a noun, an adjective, an adverb, a prefix, and a postfix.

5. (Cancelled)

6. A profit sharing method of content-cooperative work, the profit sharing method comprising:
registering cooperative workers for music content;
setting a weight of each part of the music content;
making, by the cooperative workers, a draft of the music content and registering the draft of the music content with a server 200;
making a revision of a registered draft and registering the revision with the server 200 as different versions;
applying the weight to a selected version of content and analyzing a level of contribution of each cooperative worker, when one of registered versions of content is selected;
determining a shared profit to be provided to each cooperative worker according to the level of contribution analyzed and making a contract with a record producer,
wherein the analyzing of the level of contribution comprises:
ultimately summing a portion of a selected music organization part of a corresponding cooperative worker from a version R0 to a version Rx when the version Rx of music content is selected.
applying a weight to a sum to find an ultimate point P;
calculating a percentage of the ultimate point P to the sum AP of the ultimate points of all cooperative workers to find the level of contribution of a corresponding cooperative worker.

7. (Amended) The profit sharing method of claim 6, wherein the analyzing of the level of contribution comprises dividing music organization of music content into prelude, main, first chorus, bridge and second chorus parts and detecting a revised amount of each part.

8. (Cancelled)
